# EUROPÄISCHE PATENTSCHRIFT

(11) **EP 0 411 427 B1**
(45) Veröffentlichungstag und Bekanntmachung des Hinweises auf die Patenterteilung: **29.03.1995**
(21) Anmeldenummer: 90114106.9
(22) Anmeldetag: 24.07.1990
(51) Int. Cl.: D21G 1/02, F16C 13/00

(54) **Walze zur Druck- und Temperaturbehandlung von bahnförmigem Material**
Roll for heat and pressure treatment of web material
Rouleau pour le traitement par la chaleur et par pression d'une matière en bande

(30) Priorität: 01.08.1989 DE 3925367
(43) Veröffentlichungstag der Anmeldung: 06.02.1991
(73) Patentinhaber: Eduard Küsters Maschinenfabrik GmbH & Co. KG, 47805 Krefeld (DE)
(72) Erfinder: Kubik, Klaus, D-4150 Krefeld (DE)
(74) Vertreter: Palgen, Peter, Dr. Dipl.-Phys.

(56) Entgegenhaltungen:
- EP-A- 0 369 172
- WO-A-88/03610
- DE-A- 1 244 097
- DE-A- 3 639 935
- DE-A- 3 838 726
- GB-A- 2 170 576
- US-A- 4 252 184

## Beschreibung

Die Erfindung bezieht sich auf eine Walze der dem Oberbegriff des Anspruchs 1 entsprechenden Art.

Eine solche Walze ist beispielsweise aus der DE-A-36 39 935 bekannt. Bei dieser Ausführungsform ist aus dem Zwischenraum zwischen Querhaupt und Hohlwalze durch zu beiden Seiten des Querhaupts sich erstreckende Längsdichtungen und Endquerdichtungen eine halbzylinderschalenförmige Längskammer abgeteilt, die mit einer Druckflüssigkeit zur Erzeugung einer Linienkraft im Walzspalt füllbar ist. Die Druckflüssigkeit kann gleichzeitig beheizt werden, um den arbeitenden Walzenumfang auf eine erhöhte Temperatur zu bringen. Die Flüssigkeit dient hierbei also gleichzeitig als Druck- und Wärmeträgerflüssigkeit. Der Rest des Zwischenraums bildet eine sogenannte Leckkammer, die sich durch an den Längsdichtungen übertretende Flüssigkeit ebenfalls nach und nach mit Flüssigkeit füllt, die einen gewissen Druck aufweist. Die Linienkraft im Walzspalt bestimmt sich nach der Differenz der Drücke in der dem Walzspalt zugewandten Längskammer und in der Leckkammer.

Die Erfindung ist nicht nur bei der vorgenannten Bauart von gattungsgemäßen Walzen anwendbar, bei der also die hydraulische Abstützung der Hohlwalze am Querhaupt über ein sich über die Länge erstreckendes hydraulisches Kissen in der Längskammer gebildet ist. Sie kommt vielmehr auch für Walzen in Betracht, bei denen durch einzelne Druckstempel (DE-A- 22 30 139) oder Druckleisten (DE-C-14 61 066) Kräfte gegen den Innenumfang der Hohlwalze ausgeübt werden. Auch hierbei kann die die Druckelemente beaufschlagende hydraulische Flüssigkeit beheizt sein. Auch kombinierte Konstruktionen sind bekannt, etwa durch die DE-C- 23 32 861, bei der in einer mit Druckflüssigkeit gefüllten Längskammer einzelne, Zusatzdrücke aufbringende Stützelemente angebracht sind, oder durch die DE-C- 30 03 395, bei der aus einer Längskammer durch geeignete Abgrenzungselemente stellenweise der Druck fortgenommen wird oder auch durch die DE-A- 36 40 902, bei welcher der ganze Zwischenraum ohne Längsdichtungen rundum mit Druckflüssigkeit gefüllt ist und Dichtungsglieder vorhanden sind, die wahlweise Zusatzdrücke aufbringen oder stellenweise den Druck fortnehmen. Den vorgenannten und weiteren Bauarten ist gemeinsam, daß sich in dem Zwischenraum zwischen Hohlwalze und Querhaupt eine Druckflüssigkeit befindet, die Wärme auf den Innenumfang der Hohlwalze übertragen und damit den Außenumfang der Hohlwalze auf eine erhöhte Temperatur bringen kann.

Obwohl die vorgenannten Walzen überwiegend damit befaßt sind, geht es nicht nur um Temperaturerhöhungen, sondern gegebenenfalls auch um Temperaturerniedrigungen, wie z.B. in der DE-C-28 44 051. Die Wärmeträgerflüssigkeit soll also im einen Fall Wärme an den Innenumfang der Hohlwalze abgeben, in anderem Fall Wärme von diesem Innenumfang abführen.

Ausgangspunkt der Erfindung ist die neuere Entwicklung auf dem Papiersektor gewesen, die stark zum Heißglätten tendiert. Die Papierbahn wird hierbei durch einen beheizten Walzspalt hindurchgeleitet, was die oberflächliche Plastifizierung des Papiers und damit die Glättung fördert.

Entsprechend der Arbeitsbreite moderner Papiermaschinen müssen die zum Glätten verwendeten Walzen Längen bis zu 10 m aufweisen. Dabei kommen Durchmesser bis 1,5 m in Betracht.

Wegen der Widerstandsfähigkeit gegen die abrasiven Einwirkungen des Papiers bestehen solche Walzen aus Hartguß. Wegen des hohen Gewichts und der damit verbundenen Trägheit beim Beschleunigen und Abbremsen, insbesondere aber auch wegen der Durchbiegungssteuerbarkeit, sind die in Rede stehenden Walzen nicht als massive Walzen ausgebildet, was auch gußtechnisch Probleme machen würde, sondern als Hohlwalzen, die um ein feststehendes Querhaupt umlaufen.

Derart große Hohlwalzen aus Hartguß sind ziemlich temperaturspannungsempfindlich. Aus diesem Grund kann nicht jede beliebige Wandstärke hergestellt werden, sondern es müssen Mindestwandstärken eingehalten werden, die bei einem Außendurchmesser einer solchen Walze in der Größenordnung von 140 mm liegen.

Eine Gußwand dieser Stärke stellt natürlich eine erhebliche Barriere für den Wärmetransport dar. Andererseits werden am Außenumfang der Walze beim Heißglätten erhebliche Wärmemengen benötigt. Bei der hohen Arbeitsgeschwindigkeit führt die Papierbahn sehr große Wärmemengen ab, insbesondere weil beim Heißglätten die die Temperatur des Walzenumfangs auf größenordnungsmäßig 150°C gehalten werden muß.

Es könnten durch die Wärmeträgerflüssigkeit am Innenumfang der Hohlwalze größere Wärmemengen übertragen werden, wenn die Temperaturdifferenz zwischen Innenumfang und Außenumfang der Hohlwalze sehr hoch gemacht werden könnte. Dies ist aber technisch nicht möglich, weil die Wärmeträgerflüssigkeit in der Praxis auch noch schmieren muß und Flüssigkeiten, die gleichzeitig schmieren können und hohe Temperaturen vertragen, sehr dünn gesät sind. Es stehen praktisch nur Polyglykole zur Verfügung, die maximal auf 200° C aufgeheizt werden können. Mit einer solchen Temperatur am Innenumfang der Hohlwalze läßt sich ein ausreichender Wärmetransport zum Heißglätten einer schnellaufenden Papierbahn in vielen Fällen nicht bewerkstelligen.

Der Erfindung liegt die Aufgabe zugrunde, die Wärmeübertragungsleistung von Walzen der in Rede stehenden Art auf praktikable Weise zu erhöhen.

Diese Aufgabe wird durch die in Anspruch 1 wiedergegebene Erfindung gelöst.

Es ist hierdurch erreicht, daß die Wärmeträgerflüssigkeit mit ihrer begrenzten Temperatur näher an den arbeitenden Walzenumfang herangebracht werden kann, so daß die zu überwiedende Wärmetransportbarriere nicht mehr so maßgeblich ist und die Temperaturdifferenz zwischen der Wärmeträgerflüssigkeit und der am arbeitenden Walzenumfang auftretenden Temperatur geringer wird.

Es ist seit langem bekannt, in Walzen über den Umfang verteilte Kanäle für Wärmeträgerflüssigkeiten anzubringen, z.B. in Gestalt achsparalleler Tiefbohrungen, die sich über die Länge der Walze erstrecken und an den Enden in bestimmter Weise mäanderförmig zur Erzielung einer Temperaturvergleichmäßigung verbunden sind (siehe Firmenschrift "SHW-Äquitherm" der SHW-GmbH, D-7923 Königsbronn). Bei den bekannten Walzen bedarf es eines aufwendigen Drehanschlusses für die Zu- und Ableitung der Wärmeträgerflüssigkeit, wie er beispielsweise in der DE-A- 34 17 093 dargestellt ist.

Bei den bekannten Walzen war ein solcher Drehanschluß noch relativ leicht zu realisieren, weil Walzenzapfen relativ geringen Durchmessers vorhanden waren.

Bei der gattungsgemäßen Bauweise jedoch ist eine Hohlwalze großen Durchmessers vorhanden, die keinen Walzenzapfen aufweist und bei der die Zuführung der Wärmeträgerflüssigkeit auf großem Radius nach der bekannten Methode ein erhebliches Problem dargestellt hätte. Bei der Erfindung erfolgt die Zuführung von innen durch das stillstehende Querhaupt, ohne daß es eines äußeren Drehanschlusses bedarf.

Es ist dementsprechend ein wesentlicher Vorteil der Erfindung, daß die Zu- und Ableitung der durch die Kanäle der Hohlwalze hindurchgepumpten Wärmeträgerflüssigkeit an dem undrehbaren Querhaupt erfolgen kann.

Die Art und Weise, wie die Wärmeträgerflüssigkeit aus dem stillstehenden Querhaupt in die umlaufende Hohlwalze hineingebracht wird, ist für sich genommen aus der DE-B 12 44 097 bekannt. Hierbei ist das undrehbare Querhaupt von einem hydraulisch an dem Querhaupt abgestützten Rohr umgeben, auf welchem die Kanäle aufweisende Hohlwalze mittels über die Länge verteilter Wälzlager abgestützt ist. An beiden Enden sind durch an dem Rohr angebrachte, gegen den Innenumfang der Hohlwalze anliegende in Achsrichtung benachbarte Dichtungen Überleitkammern gebildet, durch die die Wärmeträgberflüssigkeit der Hohlwalze zu- und aus der Hohlwalze abgeführt wird. Die Wärmeträgerflüssigkeit bleibt von der zur Abstützung des Rohres dienenden hydraulischen Flüssigkeit getrennt.

Bei der Erfindung jedoch wird die Wärmeträgerflüssigkeit der Hohlwalze in den Zwischenraum zwischen Hohlwalze und Querhaupt entlassen und vermischt sich mit der dort befindlichen Wärmeträgerflüssigkeit. Beide Wärmeträgerflüssigkeiten werden zusammen aus der Walze abgezogen.

Der auf die Wärmeträgerflüssigkeit in der Hohlwalze ausgeübte Druck braucht hierbei nur geringfügig über dem Druck in den Zwischenraum zu liegen, um einen Transport durch die Kanäle der Hohlwalze zu bewerkstelligen. Wenn es sich um eine Walze mit einer abgeteilten Längskammer handelt und die Druckflüssigkeit in die Leckkammer entlassen wird, darf der Druck sogar nicht zu sehr von dem in der Leckkammer ohnehin herrschenden Druck abweichen, weil sonst, bei zu hohem Gegendruck in der Leckkammer, die Linienkraft beeinflußt wird.

Die gesamte Wärmeübertragungsleistung der erfindungsgemäßen Walze setzt sich also aus der am Innenumfang der Hohlwalze durch die in den Zwischenraum zwischen dieser und dem Querhaupt befindliche Wärmeträgerflüssigkeit bewirkte Wärmeübertragung und der Wärmeübertragung durch die durch die Kanäle der Hohlwalze strömende Wärmeträgerflüssigkeit zusammen.

Der Gedanke, die am Walzenumfang benötigte Wärmeübertragung durch zwei zusammenwirkende Einrichtungen zu ermöglichen, ist für sich genommen zwar aus der DE-PS 34 29 695 bekannt, doch wird hierbei eine zusätzliche Wärmemenge von außen induktiv aufgebracht. Für die Erzeugung sehr großer Wärmemengen auf induktivem Wege bedarf es eines erheblichen Aufwandes. Durch die Hindurchleitung durch die Kanäle der Hohlwalze lassen ich große Wärmebeträge wirtschaftlicher bereitstellen.

Im einzelnen kann die Dichtungsanordnung in der in Anspruch 2 wiedergegebenen Weise realisiert werden, wobei von Vorteil ist, daß ein ohnehin vorhandenes Element, nämlich die Endquerdichtung, für die Überleitung der Wärmeträgerflüssigkeit mitbenutzt werden kann.

Die Ausgestaltung nach Anspruch 3 empfiehlt sich, um einen Gegenstrom und den entsprechenden Temperaturausgleich zu erzielen.

In der Zeichnung sind Ausführungsbeispiele der Erfindung schematisch dargestellt.

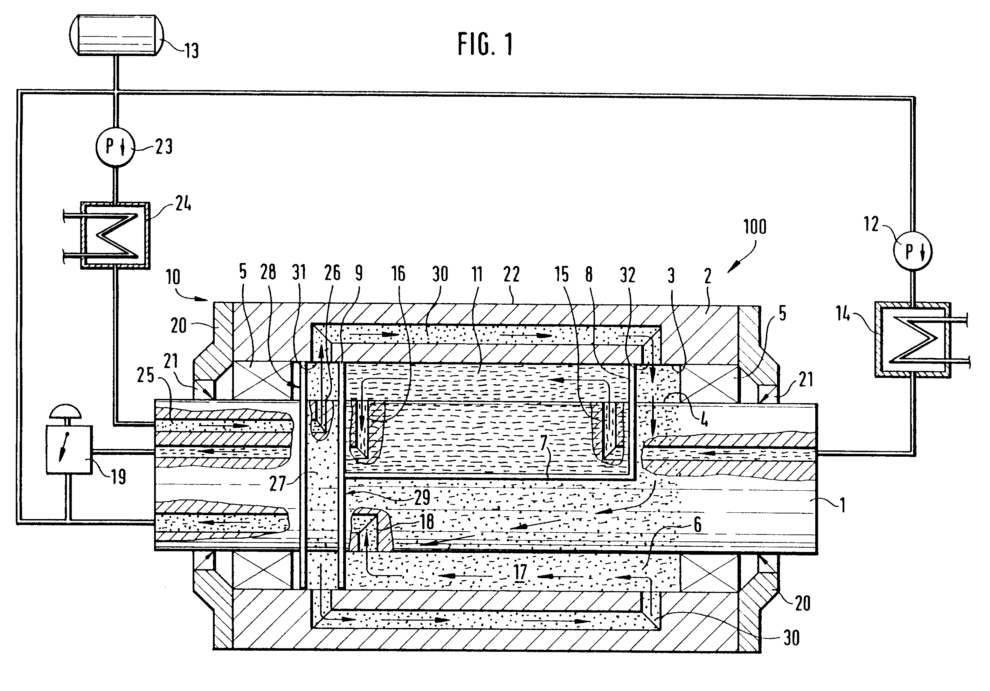

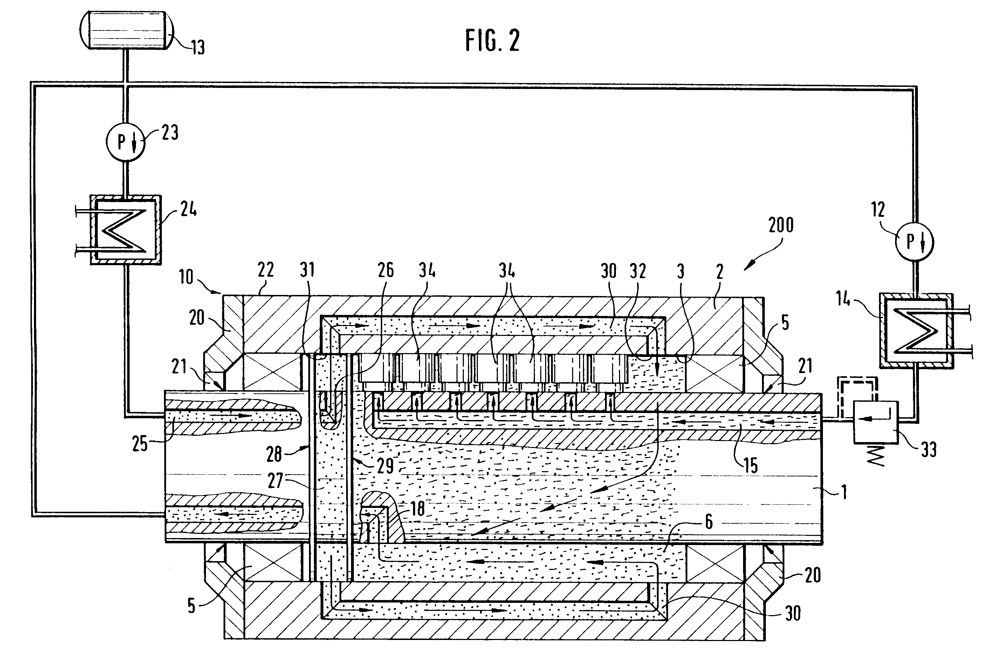

Fig. 1 und 2 zeigen Schnittansichten verschiedener Ausführungsformen erfindungsgemäßer Walzen mit der zugehörigen Flüssigkeitsführung.

Die in Fig. 1 als Ganzes mit 100 bezeichnete Walze umfaßt ein undrehbares Querhaupt 1, um welches eine Hohlwalze 2 drehbar ist, die mit ihrem Innenumfang 3 allseitigen Abstand vom Außenumfang 4 des Querhauptes 1 beläßt. Die Hohlwalze 2 ist an den Enden auf Lagern 5 auf dem Querhaupt gelagert. Die Lager 5 sind nicht zwingend. Stattdessen könnte die Hohlwalze 2 auch insgesamt an geeigneten Führungen radial gegenüber dem Querhaupt 1 verlagerbar sein.

Zwischen dem Innenumfang 3 der Hohlwalze 2 und dem Außenumfang 4 des Querhaupts 1 besteht ein Zwischenraum 6, aus dem durch zu beiden Seiten des Querhaupts 1 an diesem an der breitesten Stelle angebrachte Längsdichtungen 7 sowie Endquerdichtungen 8,9 eine halbzylinderschalenförmige Längskammer 11 abgeteilt ist, die mittels einer Pumpe 12 aus einem Reservoir 13 über einen der Pumpe 12 nachgeschalteten Wärmetauscher 14 über eine am gemäß Fig. 1 rechten Ende in die Längskammer 11 einmündende Zuführleitung 15 mit beheizter Wärmeträgerflüssigkeit, die gestrichelt angedeutet ist, füllbar ist. An dem in Fig. 1 linken Ende wird die Wärmeträgerflüssigkeit, die gleichzeitig einen Druck gegen den Innenumfang 3 der Hohlwalze 2 in Richtung auf den Walzspalt 10 ausübt, über eine Abführleitung 16 wieder abgezogen.

Die Längsdichtungen 7 schließen die Längskammer 11 nicht hermetisch ab. Ein gewisser Anteil an Wärmeträgerflüssigkeit tritt unter dem Druck in der Längskammer 11 an den Längsdichtungen 7 über und gelangt in die durch den Rest des Zwischenraums 6 gebildete Leckkammer 17, aus der sie über die Rückleitung 18 abgezogen wird. Das Differenzdruckventil 19 hält eine vorbestimmte Druckdifferenz zwischen der Längskammer 11 und der Leckkammer 17 aufrecht, was die Bestimmung der Linienkraft erlaubt.

Die Lager 5 werden von der Wärmeträgerflüssigkeit mitgeschmiert. Die Hohlwalze 2 weist Enddeckel 20 auf, an denen mit dem Querhaupt 1 zusammenwirkende Dichtungen 21 vorgesehen sind, die den Zwischenraum 6 in den beiden Achsrichtungen abdichten.

Um die die Temperatur des arbeitenden Umfangs 22 der Hohlwalze 2 bestimmende, in der Längskammer 11 auf den Innenumfang 3 der Hohlwalze 2 übertragene Wärmemenge zu erhöhen, sind in der Hohlwalze 2 achsparallele Kanäle 30 vorgesehen, die jeweils einen Einlaß 31 und einen Auslaß 32 am Innenumfang 3 der Hohlwalze 2 aufweisen. In der schematischen Darstellung ist einem achsparallelen Kanal 30 jeweils ein Einlaß 31 und ein Auslaß 32 zugeordnet. Es versteht sich aber, daß die Kanäle 30 auch aus mehreren einzelnen, z.B. mäanderförmig miteinander verbundenen Kanälen bestehen können. Die Anordnung der Kanäle ist an sich beliebig und wird lediglich dadurch bestimmt, daß über die Arbeitsbreite der Walze 100 eine gleichmäßige Verteilung des Wärmeaustauschsauf der Umfangsfläche 22 gegeben sein soll.

Die Kanäle 30 werden aus dem Vorratsbehälter 13 über eine Pumpe 23 und einen Wärmetauscher 24 mit Wärmeträgerflüssigkeit versorgt, die über Zuführkanäle 25 in dem feststehenden Querhaupt 1 herangeführt wird und gepunktet angedeutet ist. Der Zuführkanal 25 mündet bei 26 in eine Überleitkammer 27, die dadurch gebildet ist, daß die Endquerdichtung 9, die zur Abdichtung der Längskammer 11 an sich nur halbkreisförmig sein müßte, durch einen weiteren Halbkreis zu einer vollen, über den ganzen Umfang des Zwischenraums 6 gehenden Endquerdichtung 29 ergänzt ist, der mit geringem Abstand auf der Seite des Lagers 5 eine ebenfalls über den ganzen Umfang gehende Endquerdichtung 28 benachbart ist.

Sowohl die Ausmündung 26 des Zuführkanal 25 als auch die Einmündung 31 des Kanals 30 liegen zwischen den Endquerdichtungen 9,29 und 28, d.h. in der Überleitkammer 27. Durch den Druck der durch den Zuführkanal 25 herangeführten Wärmeträgerflüssigkeit füllt sich die Überleitkammer 27 und tritt die Wärmeträgerflüssigkeit in die Kanäle 30 ein und strömt unter dem Druck, der höher sein muß als der Druck in dem Zwischenraum 6, in Richtung der Pfeile, um an dem Auslaß 32 in den Zwischenraum 6 überzutreten, sich dort mit der aus der Längskammer 11 ausgetretenen Leckflüssigkeit zu vermischen und gemeinsam mit dieser über die Rückleitung 18 abgezogen zu werden. Die Endquerdichtungen 28,29 liegen neben dem Einlaß 31 am Innenumfang 3 der Hohlwalze 2 an, so daß keine querverlaufenden Kanten an den Dichtungen 28,29 vorbeistreifen.

Die Kanäle 30 können durch längs durch die Hohlwalze 2 hindurchgehende Tiefbohrungen von beispielsweise 30 mm Durchmesser gebildet sein. Es sind aber auch andere Ausführungen und Anordnungen der Kanäle möglich, beispielsweise durch einen doppelschichtigen Aufbau der Hohlwalze 2 und an der Trennschicht ausgebildete und durch die Zusammenfügung geschlossene Oberflächenkanäle.

Soweit in den folgenden Figuren funktionell gleiche Teile vorhanden sind, sind die Bezugszahlen gleich.

Die Walze 200 unterscheidet sich dadurch von der Walze 100, daß die Wärmeträgerflüssigkeit nach dem Passieren des Wärmetauschers 14 über einen Druckregler 33 und die Leitung 15 nicht einer Längskammer 11, sondern einer Reihe von in radialen Zylinderbohrungen des Querhaupts 1 nach Art eines Kolbens geführten hydraulischen Stützelementen zugeleitet wird, die auf der Seite des Walzspalts 10 von innen gegen den Innenumfang 3 der Hohlwalze 2 anliegen. Die Stützelemente 34 weisen innere Kanäle auf, durch die Wärmeträgerflüssigkeit in hydrostatische Taschen auf der Anlageseite der Stützelemente 34 gelangt. Diese Flüssigkeit strömt über den Rand der Taschen ab und bildet dort einen Flüssigkeitsfilm, der eine metallische Berührung der Stützelemente 34 und des Innenumfangs der Hohlwalze 3 verhindert.

Tatsächlich ist im allgemeinen nicht nur ein einzelner Druckregler 33 vorhanden, sondern ein Druckregler für jedes einzelne Stützelement 34 oder für bestimmte Gruppen von Stützelementen 34. Dementsprechend symbolisiert 15 auch in allgemeinen mehrere separat zu den einzelnen Stützelement 34 hinführende Leitungen.

Die über die Ränder der Stützelemente 34 überströmende Wärmeträgerflüssigkeit tritt in den Zwischenraum 6 aus und vermischt sich dort mit der durch Punkte dargestellten Wärmeträgerflüssigkeit, die die Kanäle 30 passiert. Beide Flüssigkeitsmengen werden ebenso wie bei Walze 100 gemeinsam durch die Rückleitung 18 abgezogen. Die Temperaturen der durch die Kanäle 30 strömenden und der den Stützelementen 34 zugeführten Wärmeträgerflüssigkeit werden durch entsprechende Steuerung der Wärmetauscher 24,14 wenigstens annähernd gleich eingestellt. Dadurch ist von den Stützelementen 34 in das Innere der Hohlwalze praktisch kein Temperaturgefälle vorhanden und findet kaum ein Wärmetransport in radialer Richtung statt. An den Stützelementen 34 können also unterschiedliche Flüssigkeitsmengen nach außen in den Zwischenraum 6 übertreten, ohne daß dadurch die Gleichmäßigkeit der Temperatur längs der Walze 200 gestört würde.

## Patentansprüche

1. Walze zur Druck- und Temperaturbehandlung von bahnförmigem Material,
mit einer den arbeitenden Walzenumfang bildenden umlaufenden Hohlwalze (2),
mit einem diese der Länge nach durchgreifenden, ringsum Abstand zum Innenumfang der Hohlwalze (2) belassenden undrehbaren Querhaupt (1),
mit einer durch an dem Querhaupt (1) angebrachte gegen den Innenumfang (3) der Hohlwalze (2) anliegende Längsdichtungen (7) und Endquerdichtungen (8,9) aus dem Zwischenraum (6) abgeteilten halbzylinderschalenförmigen Längskammer (11), die mit beheizter Wärmeträgerflüssigkeit füllbar ist,
oder mit in radialen Zylinderbohrungen des Querhaupts (1) nach Art eines Kolbens geführten hydraulischen Stützelementen (34), die gegen den Innenumfang (3) der Hohlwalze (2) anliegen und auf der Anlageseite hydrostatische Taschen aufweisen, die mit beheizter Wärmeträgerflüssigkeit füllbar sind, die über den Rand der Taschen abströmt,
dadurch gekennzeichnet,
daß die Hohlwalze über ihren Umfang verteilte innere, von einer Wärmeträgerflüssigkeit durchströmbare Kanäle (30) aufweist und die Wärmeträgerflüssigkeit den Kanälen (30) durch Zuführkanäle (25) in dem undrehbaren Querhaupt (1) zuführbar ist,
daß durch eine am Querhaupt (1) angebrachte, gegen den Innenumfang (3) der Hohlwalze (2) dichtend anliegende Dichtungsanordnung (28,29) eine Überleitkammer (27) gebildet ist, in die Zuführkanäle (25) in dem undrehbaren Querhaupt (1) und Einlässe (31) der Kanäle (30) der Hohlwalze (2) münden,
und daß Auslässe (32) der Kanäle (30) der Hohlwalze (2) in den Zwischenraum (6) zwischen der Hohlwalze (2) und dem Querhaupt (1) münden, so daß die aus den Kanälen (30) ausgetretene Wärmeträgerflüssigkeit gemeinsam mit der in dem Zwischenraum (6) befindlichen, an den Längsdichtungen (7) und Endquerdichtungen (8,9) bzw. den Stützelementen (34) übergetretenen Wärmeträgerflüssigkeit über eine Rückleitung (18) aus dem Zwischenraum (6) abziehbar ist.

2. Walze nach Anspruch 1, dadurch gekennzeichnet, daß die Dichtungsanordnung (28,29) eine zu einer über den ganzen Umfang gehenden Dichtung ergänzte Endquerdichtung (9,29) der halbzylinderschalenförmigen Längskammer (11) sowie eine weitere dieser dicht benachbarte über den ganzen Umfang gehende Querdichtung (28) umfaßt.

3. Walze nach Anspruch 1 oder 2, dadurch gekennzeichnet, daß die Auslässe (32) der Kanäle (30) in der Nähe des einen Endes des Zwischenraums (6) zwischen Querhaupt (1) und Hohlwalze (2) und die Mündung der Rückleitung (18) aus dem Zwischenraum (6) in der Nähe des anderen Endes des Zwischenraums (6) gelegen sind.

## Claims

1. A roller for the pressure and temperature treatment of material in web form,
comprising a rotating shell (2) forming the operative roller periphery,
comprising a non-rotatable beam (1) extending lengthwise through the shell (2) and having spacing all round from the inner periphery thereof,
comprising a longitudinal chamber (11) fillable with heated heat-vehicle liquid, said longitudinal chamber being in the form of a semi-cylindrical dish separated from the intermediate space (6) by longitudinal seals (7) and end transverse seals (8, 9) mounted on the beam (1) and bearing against the inner periphery (3) of the shell (2),
or comprising hydraulic support elements (34) guided in radial cylindrical bores in the beam (1) after the style of a piston, such support elements (34) bearing against the inner periphery (3) of the shell (2) and having on the contact side hydrostatic pockets fillable with heated heat-vehicle liquid which flows off over the edge of the pockets,
characterized in that
the shell has inner ducts (30) distributed over its periphery and carrying a flow of heat-vehicle liquid, and the heat-vehicle liquid is adapted to be fed to the ducts (30) through feed ducts (25) in the non-rotatable beam (1),
in that a sealing arrangement (28, 29) mounted on the beam (1) and sealingly bearing against the inner periphery (3) of the shell (2) forms a transfer chamber (27) into which feed ducts (25) in the non-rotatable beam (1) and inlets (31) of the ducts (30) of the shell (2) lead,
and in that outlets (32) of the ducts (30) of the shell (2) lead into the intermediate space (6) between the shell (2) and the beam (1) so that the heat-vehicle liquid emerging from the ducts (30) can be withdrawn from the intermediate space (6) via a return line (18) together with the heat-vehicle liquid which is situated in the intermediate space (6) and which has passed over at the longitudinal seals (7) and end transverse seals (8, 9) or the support elements (34).

2. A roller according to claim 1, characterised in that the sealing arrangement (28, 29) comprises an end transverse seal (9, 29) of the semi-cylindrical longitudinal chamber (11), such end transverse seal (9, 29) being enlarged to form a seal extending over the entire periphery, and another transverse seal (28) close thereto and extending over the entire periphery.

3. A roller according to claim 1 or 2, characterised in that the outlets (32) of the ducts (30) are situated near one end of the intermediate space (6) between the beam (1) and the shell (2) and the orifice of the return line (18) from the intermediate space (6) is situated near the other end of the intermediate space (6).

## Revendications

1. Rouleau pour le traitement par la chaleur et la pression d'une matière en bande, comprenant :
- un cylindre creux (2), rotatif, formant la surface utile du rouleau,
- une traverse fixe (1) traversant longitudinalement le cylindre et laissant à la périphérie un intervalle par rapport à la surface intérieure du cylindre creux (2),
- une chambre longitudinale (11) en forme de demi-cylindre creux, séparée de la chambre intermédiaire (6) par des joints longitudinaux (7) et des joints transversaux d'extrémité (8, 9) prévus sur la traverse (1), et appliquée contre la surface intérieure (3) du cylindre creux (2), cette chambre étant remplie d'un fluide caloporteur chaud,
- ou d'éléments d'appui hydrauliques (34) guidés dans des perçages cylindriques de la traverse (1) comme des pistons, pour venir s'appliquer contre la surface intérieure (3) du cylindre creux (2) et ayant, sur ce côté d'appui, des poches hydrostatiques qui peuvent être remplies par le fluide caloporteur chaud, ce fluide débordant des poches par-dessus le bord,
caractérisé en ce que :
- le cylindre creux comporte, répartis à sa périphérie, des canaux (30) traversés par un liquide caloporteur et ce liquide est fourni aux canaux (30) par des canaux d'alimentation (25) prévus dans la traverse fixe (1),
- un dispositif de joints (28, 29) prévu sur la traverse (1) et appliqué de manière étanche contre la surface intérieure (3) du cylindre creux (2) forme une chambre de transfert (27) dans laquelle débouchent les canaux d'alimentation (25) de la traverse fixe (1) et les entrées (31) des canaux (30) du cylindre creux (2),
- et les sorties (32) des canaux (30) du cylindre creux (2) débouchent dans l'intervalle (6) entre le cylindre creux (2) et la traverse (1) pour que le liquide caloporteur sortant des canaux (30) puisse être extrait de la chambre intermédiaire (6), par une conduite de retour (18), en commun avec le liquide caloporteur qui se trouve dans la chambre intermédiaire (6) et qui passe à travers les joints d'étanchéité longitudinaux (7) et les joints transversaux d'extrémité (8, 9) ou les éléments d'appui.

2. Rouleau selon la revendication 1, caractérisé en ce que le dispositif de joints (28, 29) comprend un joint transversal d'extrémité (9, 29) qui occupe toute la périphérie de la chambre longitudinale (11) en forme de demi-cylindre creux ainsi qu'un autre joint transversal (28) directement adjacent et s'étendant sur toute la périphérie.

3. Rouleau selon la revendication 1 ou 2, caractérisé en ce que les sorties (32) des canaux (30) sont situées à proximité d'une extrémité de la chambre intermédiaire (6), entre la traverse (1) et le cylindre creux (2), et l'embouchure de la conduite de retour (18) de la chambre intermédiaire (6) se trouve à proximité de l'autre extrémité de la chambre intermédiaire (6).
